# EUROPEAN PATENT APPLICATION

(11) **EP 2 075 959 A1**
(43) Date of publication of application: **01.07.2009**
(21) Application number: 07301746.9
(22) Date of filing: 27.12.2007
(51) Int. Cl.: H04L 12/28

(54) **Apparatus amd method for concurently accessing multiple wireless networks (WLAN/WPAN)**

(71) Applicant: Thomson Licensing, 92100 Boulogne (FR)
(72) Inventor: Cheng, Lin Xiang, 100085, Beijing (CN); Zhang, Zhigang, 100085, Beijing (CN); Wang, Xian Lei, 100085, Beijing (CN); Zou, Li, 100088, Beijing (CN)
(74) Representative: Ruellan-Lemonnier, Brigitte

(57) **Abstract**

The present invention provides an apparatus (105) and method for concurrently accessing multiple wireless networks, comprising: a host (201) for allocating a plurality of virtual MAC addresses based on the number of the wireless networks (101,102) to be accessed, and comprising: a plurality of virtual MAC devices (204-1...204-n) each having one of the virtual MAC addresses allocated by the host (201), for accessing the multiple wireless networks (101,102) concurrently.

## Description

### FIELD OF THE INVENTION

The present invention relates in general to an apparatus and method for accessing multiple wireless networks, and more particularly, to an apparatus and method for accessing multiple wireless networks by a single interface device in the wireless communication system.

### BACKGROUND OF THE INVENTION

Wireless access technology allows user to access the wireless networks so as to obtain various information, download or upload documents from/to the networks, communicate with others and so on. Generally, a terminal device of the user includes a network interface device embedded in the terminal device or as an additional device, such as Network Interface Card (NIC), which is necessary to access the wireless networks. The terminal device can be any device, such as computer, mobile phone, Personal Digital Assistant (PDA) and so on, that can communicate over a wireless network.

In many wireless networks, the NIC of the terminal device has a media access control (MAC) address to identify the terminal device in the networks. The MAC address is a unique physical address allocated in a manufacturing stage, and is used in a MAC layer, which is a sublayer of a Data Link Control (DLC) layer in a communication protocol.

According to the conventional MAC layer protocol, the user can access only one of the wireless networks such as the infrastructure networks in the wireless communication system by a single wireless NIC card at the same time, and as a result, if wanting to change to another infrastructure network, the user must disconnect with the connected network and then connect with another network again.

There is an existing technology which provides a solution for accessing multiple wireless networks on a single wireless network interface card. This solution continuously switches the card across multiple networks, to support both wireless local area networks (WLAN) interoperability for infrastructure network communication as well as wireless personal area network (WPAN) interoperability for point to point communication. By this solution the user can also see the terminal device as being connected to multiple networks.

But the above method only support the switching between infrastructure and adhoc network, but not support the switching between two infrastructure networks on the access point (AP). Furthermore, the data traffic based on this solution has a long delay, because the system takes a long time to switch from a physical network to another network. Otherwise, it is difficult to achieve the good performance with 802.1x authentication.

Therefore, it is needed to create an apparatus and method that addresses the above mentioned problem, so as to access multiple wireless networks by a single interface card at the same time.

### SUMMARY OF THE INVENTION

An object of the invention is to provide an apparatus and method to access multiple wireless networks at the same time by multiple virtual device, and another object is access multiple infrastructure networks at the same time using a single NIC, so as to eliminate the delay for the switching time between the wireless networks.

According to one aspect of the invention, provide an apparatus for accessing multiple wireless networks, comprising: a host for allocating a plurality of virtual MAC addresses based on the number of the wireless networks to be accessed, and comprising: a plurality of virtual devices each having one of the virtual MAC addresses allocated by the host, for accessing the multiple wireless networks concurrently.

In one embodiment of the invention, the multiple wireless networks are multiple infrastructure networks with different service set identifiers.

In one embodiment, each of the virtual device accesses one of the infrastructure network based on wireless distribution system WDS.

According to another aspect of the invention, provide a method for accessing multiple wireless networks in a terminal device, comprising: allocating a plurality of virtual MAC address based on the number of the wireless networks to be accessed; and creating a plurality of virtual devices each having one of the allocated virtual MAC addresses, for accessing the multiple wireless networks concurrently.

### BRIEF DESCRIPTION OF DRAWINGS

Fig. 1 is a diagram showing an exemplary scenario for the users using a single network interface card to operate in two infrastructure networks of an AP;
Fig. 2 is an exemplary diagram of a terminal device with a single network interface card according to the embodiment of the invention;
Fig. 3 is an exemplary diagram of the network architecture of virtual MAC devices with virtual multiple MAC addresses according to the embodiment of the invention; and
Fig. 4 is a flow chart showing the procedure of sending data packets in accordance with the present invention.

### DETAIL DESCRIPTION OF PREFERRED EMBODIMENTS

A description will now be given with reference to attached figures to illustrate many advantages/features of the present invention, according to various illustrative embodiments of the present invention. In the attached figures, the like figure numbers indicate the similar elements.

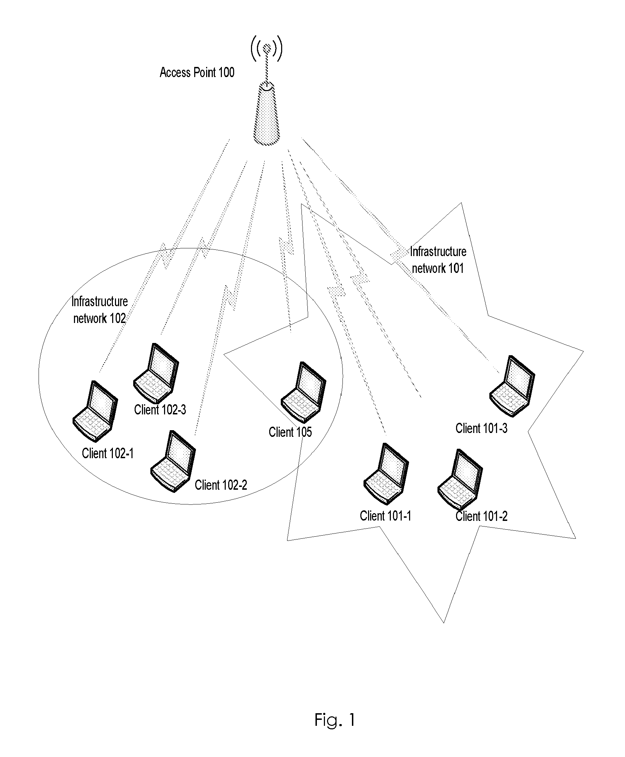

Fig. 1 is a diagram showing an exemplary scenario for a client using a single network interface card to operate in two infrastructure networks 101 and 102 of an access point (AP) 100. Although it is shown in Fig.1 that only one AP is shared by two infrastructure networks, one skilled in the art knows clearly that the two infrastructure networks can be constituted by multiple APs. A plurality of client computers 101-1 to 101-3, 102-1 to 102-3 and client computer 105 can access the corresponding infrastructure networks via the AP 100 by a network interface card therein. In figure 1, the terminal device is shown as a computer, but the invention is not limited to this embodiment, and can be any terminal devices that can access the network by a network interface circuit. In addition, one skilled in the art can recognize that the AP 100 can comprise multiple infrastructure networks, but not only two.

In figure 1, each of the infrastructure networks 101 and 102 has a different service set ID (SSID) assigned by the AP 100, and it is known that each network terminal can access concurrently only one of the infrastructure networks with the corresponding SSID by authentication of the AP. The AP will identify the network device by its unique MAC address during the authentication period. A physical MAC address of a NIC is defined by industry standard as a hardware address, and is used to uniquely identify a terminal. The NIC may support one or more well known standards or protocols such as IEEE 802 Ethernet standards, for example, IEEE802.11 and IEEE802.3.

Therefore, the client computers 101-1 to 101-3 can be authenticated by the AP 100 and then connect with the infrastructure network 101. Similarly, the client computer 102-1 to 102-3 can be authenticated by the AP 100 and then connect with the infrastructure network 102. The client computer 105 can connect with the infrastructure networks 101 or 102 by authentication of the AP100.

It is advantaged that according to the principle of the invention, a plurality of virtual MAC addresses for a terminal are allocated automatically or according to the request of the users, and correspond to a plurality of virtual MAC devices of the client computer. Therefore, the client computer 105 in both of the infrastructure networks 101 and 102 of AP 100 can access the two infrastructure networks 101 and 102 at the same time by a single network interface card (NIC).

In the embodiment of the invention, each of the virtual MAC device can connect to one of the infrastructure networks based on the corresponding protocol, thus, the AP 100 will identify the multiple virtual MAC devices as multiple different terminals. Therefore, when the user wants to connect to multiple networks at the same time, the multiple virtual devices can be used to connect with the corresponding infrastructure networks, and do not need to switch between the networks. At this point, the physical MAC address will also be provided to the AP 100 as a Transmitter Address (TA), and the virtual MAC address will be as a Source Address (SA) based on the Wireless Distribution System (WDS).

The specific access method and the MAC layer architecture will be recited in the following description in detail. In addition, one skilled in the art can recognize that the above is an exemplary description, and not a limitation of the invention.

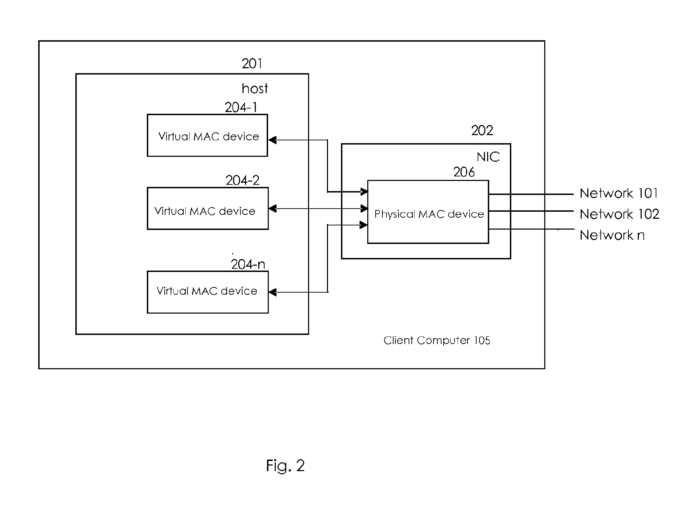

Referring now to Fig.2, which is an exemplary diagram of a client computer 105 in fig.1 with a single network interface card 202 according to the embodiment of the invention. The client computer 105 includes a host 201 and a network interface card 202. The host 201 is used for allocating the virtual MAC addresses 204-1 to 204-n used as multiple virtual devices, and controlling the connection between the network interface card 202 and the network 101, network 102 and so on. The NIC 202 is used for forwarding the packets from each virtual MAC device to AP100, or the packets from AP100 to each virtual MAC device, so as to access the infrastructure networks.

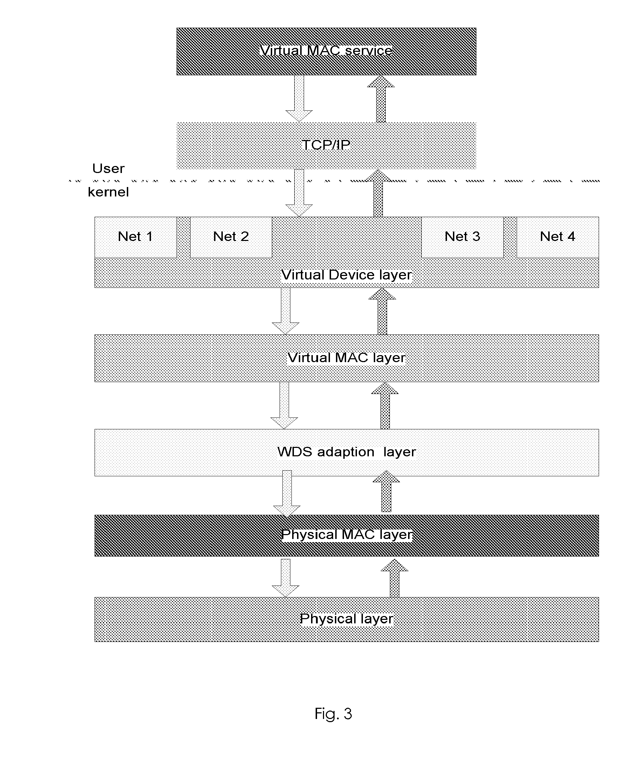

Fig. 3 is an exemplary diagram of the network architecture of virtual MAC devices 204 with virtual multiple MAC addresses according to the embodiment of the invention. The network architecture is based on the wireless distribution system (WDS) as an example. As shown in the figure, the network architecture includes physical layer, physical MAC layer, WDS adaptation layer, virtual MAC layer, virtual device layer, application layer and virtual MAC service layer.

The physical layer includes various devices for transferring data to and from the networks.

The physical MAC layer is responsible for encapsulating 802.11 frame and decapsulating 802.11 frame, also responsible for receiving the frame from Physical layer or sending the frame to Physical layer.

The WDS adaptation layer is responsible for receiving the frame from each Virtual MAC layer to Physical MAC layer and adding some correct WDS flag in the frame, also responsible for dispatching the frame from Physical MAC layer to correct Virtual MAC layer. In the embodiment of the invention, the field in WDS flag "From DS" and "To DS" is set into "11", for indicating that the physical MAC device is considered as another AP to forward data. For the four situation of the WDS flag, if To DS = 0 &&From DS = 0, it means that a data frame direct from one station (STA) to another STA within the same IBSS, as well as all management and control type frames. If To DS = 1 && From DS = 0, it means that data frame is destined for the DS. If To DS = 0 && From DS = 1, it means that data frame is exited from the DS. If To DS = 1 && From DS = 1, it means that wireless distribution system (WDS) frame is being distributed from one AP to another AP.

The virtual MAC layer is responsible for managing authentication and association between each virtual device and AP. Each virtual device can be considered as a terminal in the networks, and the authentication and association is known in the art, so herein will not be described in detail.

The Virtual device layer is responsible for creating multiple virtual devices based on the number of the networks to be accessed by using the common creating method in the art of the operational system. Each virtual device corresponds to a virtual MAC address, and can be connected to an infrastructure network, Net1 to Net4 as shown in Fig.3. MAC address can be input by the user or produced automatically. The above layers including physical layer, physical MAC layer, WDS adaption layer, virtual MAC layer and virtual device layer is the kernel of the architecture. The user layer including the application layer and the virtual MAC layer will be described as following.

The application layer includes various application programs such as TCP/IP, and is responsible for providing the network service for the terminal.

The MAC service layer is responsible for providing Man Machine Interface (MMI) for the user to create multiple virtual devices; the user can decide the number of virtual devices, input MAC address for virtual devices, and decide whether he/she enable the automatic creating MAC and so on.

The creating of multiple virtual devices and multiple virtual addresses can be initiated at the time when the NIC is plug in, when the system reboot, or when receiving a request for the creating. For example, the virtual MAC service monitors the plug in event of the NIC. When the NIC is plug in, a request of creating the virtual devices will be sent to the user. Then the user selects the number of virtual devices, and input virtual MAC address for each virtual device for creating the virtual devices with corresponding virtual addresses of the required number.

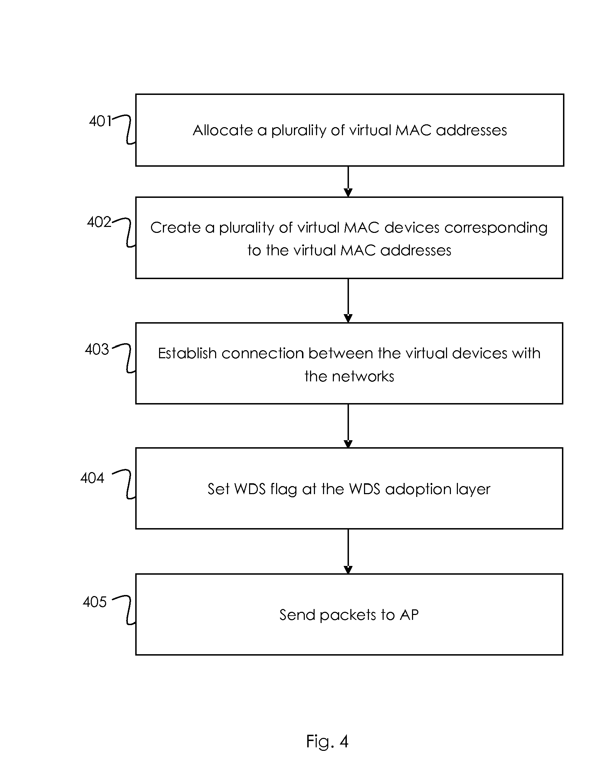

Referring now to Fig.4, the method of accessing the multiple networks by a single NIC will be described below. The process of client computer 105 in Fig.1 will be described as an example. Fig.4 is a flow chart showing the procedure of sending data packets in accordance with the present invention. It is an exemplary embodiment based on WDS.

Before sending packets to the corresponding infrastructure networks, a plurality of virtual MAC addresses are allocated based on the number of the infrastructure networks to be accessed at step 401. The number of the infrastructure networks can be set by the users as required. Then a plurality of virtual device will be created according to the plurality of virtual MAC addresses at step 402, and each of the virtual devices has one of the allocated virtual addresses. At step 403, each of the virtual devices shall establish a connection with the respect networks. For example, virtual device 204-1 will connect with infrastructure network 101, and at the same time, virtual device 204-2 will connect with the infrastructure network 102. In order to establish the connection, the virtual devices will be authenticated by the AP 100 according to the corresponding protocol. The authentication process is known in the art and will be omitted herein.

After connecting with the respect networks, the virtual device 204-1 and 204-2 can send packets to other terminals in the respect network via the AP100. At step 404, The WDS flag will be set in the WDS layer. For example, if the virtual device 204-1 will send packets to the terminal computer 101-1 in the infrastructure network 101, the flags "From DS" and "To DS" will be set into "11", and the field "SA" is set into the virtual address of the virtual device 204-1, the field "TA" will be the physical MAC address of the client computer 105, and the "DA" will be the MAC address of the computer 101-1. After that, at step 405 the packets will be send to the AP 100 for forwarding to the computer 101-1.

As described above, each of the virtual devices can send packets to the corresponding networks. Similarly, when the client computer 105 intend to receive packets from the AP100 after the connection of the computer and the networks is established, the received WDS flag will be abstracted in the WDS adaption layer. In the WDS flag, the field "Destination Address (DA)" and "Receiver Address (RA)" can be read. If the virtual device 204-1 is receiving packets from the terminal computer 101-1 in the infrastructure network 101, the field "DA" will be the virtual address of the virtual device 204-1, and the field "RA" will be the physical address of the computer 105.

As described above, each virtual device can send and receive packets from respect infrastructure network. Therefore, the client computer 105 can access multiple infrastructure networks at the same time by a single NIC, and does not need to switch between the multiple networks, so as to eliminate the delay of the data traffic caused by the switching.

Although the specific apparatus and method for accessing multiple wireless networks by a single wireless NIC at the same time is described above, one skilled in the art can recognize that the above example using a single wireless NIC is just for explaining the invention clearly, and not limited the invention into a single wireless NIC. The method based on the principle of the invention can access multiple networks as required by using the virtual devices, but not the limited physical devices with physical MAC addresses.

The foregoing merely illustrates the principles of the invention and it will thus be appreciated that those skilled in the art will be able to devise numerous alternative arrangements which, although not explicitly described herein, embody the principles of the invention and are within its spirit and scope. It is to be understood that numerous modifications may be made to the illustrative embodiments and that other arrangements may be devised without departing from the spirit and scope of the present invention as defined by the appended claims.

## Claims

1. An apparatus for accessing multiple wireless networks, comprising:
a host for allocating a plurality of virtual MAC addresses based on the number of the wireless networks to be accessed, and comprising:
a plurality of virtual devices each having one of the virtual MAC addresses allocated by the host, for accessing the multiple wireless networks concurrently.

2. The apparatus according to claim 1, wherein the multiple wireless networks are multiple infrastructure networks with different service set identifiers.

3. The apparatus according to claim 2, wherein each of the virtual devices accesses one of the multiple infrastructure networks based on wireless distribution system WDS.

4. The apparatus according to claim 2 or 3, wherein each virtual MAC address is set as a source address when sending packets to the wireless network, and as a destination address when receiving packets from the wireless network.

5. The apparatus according to claim 2 or 3, further comprising:
a network interface device for forwarding packets between the plurality of virtual devices and the corresponding infrastructure networks.

6. The apparatus according to claim 5, wherein the network interface device has a physical MAC address, which is set as a transmitter address when sending packets to the infrastructure network, and as a receiver address when receiving packets from the infrastructure network.

7. A method for accessing multiple wireless networks in a terminal device, comprising:
allocating a plurality of virtual MAC address based on the number of the wireless networks to be accessed; and
creating a plurality of virtual devices each having one of the allocated virtual MAC addresses, for accessing the multiple wireless networks concurrently.

8. The method according to claim 7, wherein the multiple wireless networks are multiple infrastructure networks with different service set identifiers.

9. The method according to claim 8, wherein each of the virtual device accesses one of the multiple infrastructure networks based on wireless distribution system WDS.

10. The method according to claim 8 or 9, wherein each virtual MAC address is set as a source address when sending packets to the wireless network, and as a destination address when receiving packets from the wireless network.

11. The method according to claim 8 or 9, further comprising:
forwarding packets between the plurality of virtual devices and the corresponding wireless networks by a network interface device in the terminal device.

12. The method according to claim 11, wherein the network interface device has a physical MAC address, which is set as a transmitter address when sending packets to the wireless network, and as a receiver address when receiving packets from the wireless network.
